Europäisches Patentamt

European Patent Office

Office européen des brevets

(19)

(11) Veröffentlichungsnummer : **0 196 360**
**B1**

(12) ## EUROPÄISCHE PATENTSCHRIFT

(45) Veröffentlichungstag der Patentschrift :
07.03.90

(51) Int. Cl.⁵ : **B 62 D 25/08**

(21) Anmeldenummer : 85111859.6

(22) Anmeldetag : 19.09.85

(54) Längsträgerabstützung für den Vorderteil einer selbsttragenden Kraftfahrzeugkarosserie.

(30) Priorität : 03.04.85 DE 3512213

(43) Veröffentlichungstag der Anmeldung :
08.10.86 Patentblatt 86/41

(45) Bekanntmachung des Hinweises auf die Patenterteilung : 07.03.90 Patentblatt 90/10

(84) Benannte Vertragsstaaten :
BE DE FR GB IT SE

(56) Entgegenhaltungen :
DE-A- 2 336 213
DE-A- 2 408 548
DE-A- 2 725 083
DE-A- 2 725 084
DE-A- 2 847 679
DE-A- 3 047 031
DE-A- 3 243 756

(73) Patentinhaber : FORD-WERKE AKTIENGESELLS-
CHAFT
Ottoplatz 2 Postfach 21 03 69
D-5000 Köln 21 (DE)
BE DE IT SE
FORD MOTOR COMPANY LIMITED
Eagle Way
Brentwood Essex CM13 3BW (GB)
GB
FORD FRANCE SOCIETE ANONYME
344 Avenue Napoléon Bonaparte B.P. 307
F-92506 Rueil Malmaison Cedex (FR)
FR

(72) Erfinder : Hürten, Oskar
Weissdornweg 130
D-5000 Köln 30 (DE)
Erfinder : Vogt, Hans
Kielsberg 36
D-5063 Overath (DE)

(74) Vertreter : Ritzkowsky, Harald, Dipl.-Ing.
Ford-Werke Aktiengesellschaft Patentabteilung
Z/DRR-2 Ottoplatz 2
D-5000 Köln 21 (DE)

EP 0 196 360 B1

**Beschreibung**

Die Erfindung geht aus von einer Längsträgerabstützung für den Vorderteil einer selbsttragenden Kraftfahrzeugkarosserie der im Oberbegriff des Patentanspruchs 1 aufgezeigten Bauart.

Aus der DE-C-24 08 548 ist eine Längsträgerabstützung für den Vorderteil einer selbsttragenden Kraftfahrzeugkarosserie mit einem einen Tunnel aufweisenden Bodenblech und mit aus Längsträgerblechen gebildeten, ein Kastenprofil aufweisenden vorderen Längsträgern an jeder Seite, die sich jeweils im Bereich der Spritzwand bzw. des vorderen Bodenblechteiles in zwei gabelartige, in Verbindung mit dem Bodenblech Kastenprofile bildende Längsträgerarme aufteilen, von denen sich der fahrzeuginnere Längsträgerarm am Fahrzeugtunnel und der fahrzeugäußere Längsträgerarm am Türschweller anschließen.

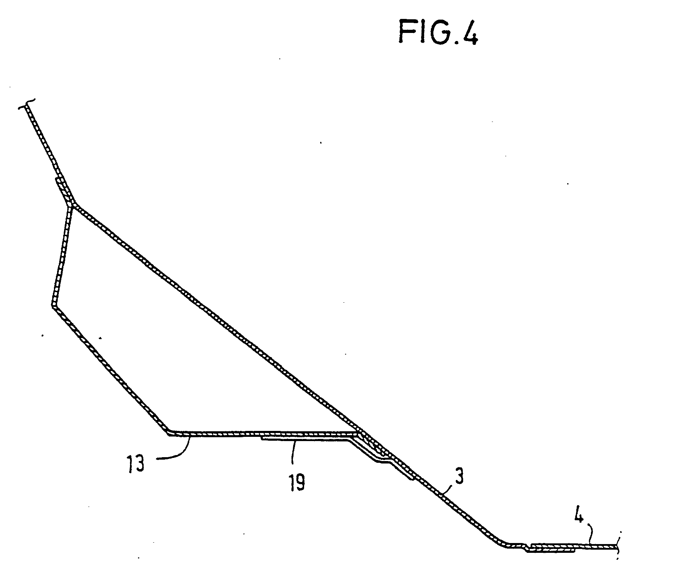

Bei der bekannten Längsträgerabstützung ist, wie insbesondere der Figur 4 dieser Patentschrift zu entnehmen ist, der vordere Längsträgerteil aus zwei miteinander verbundenen Längsträgerblechen gebildet, die im Bereich der Spritzwand bzw. des vorderen Bodenblechteiles enden, während die zwei gabelartigen, in Verbindung mit dem Bodenblechkasten Profile bildenden Längsträgerarme durch sich anschließende, getrennte Längsträgerarmbleche gebildet werden.

Dadurch weist die bekannte Längsträgerabstützung den Nachteil auf, daß ein kontinuierlicher Kraftfluß von aus einem Frontaufprall eingeleiteten Kräften nicht gegeben ist, da die Schweißverbindungsbereiche zwischen dem vorderen Längsträger und den gabelartigen Längsträgerarmen eine störende Unterbrechung bilden. Darüberhinaus weist die bekannte Längsträgerabstützung noch den Nachteil auf, daß durch das Anschmiegen der fahrzeuginneren Längsträgerarme im Fahrzeugtunnel, dieser Tunnel entsprechend hoch ausgeführt werden muß, um die Unterbringung von erforderlichen Aggregate, wie Wechselgetriebe und Kardanwelle sicherzustellen.

Aus der DE-C-27 25 083 ist eine Längsträgerabstützung für den Vorderteil einer selbstragenden Kraftfahrzeugkarosserie ähnlicher Art bekannt, bei der gleichfalls ein vorderer Längsträger aus Längsträgerblechen gebildet ist, wobei eines der Längsträgerbleche sich schräg über den vorderen Bereich des Bodenbleches erstreckt, während durch zusätzliche Längsträgerarmbleche, die am vorderen Längsträger angeschlossen werden, gabelartige Längsträgerarme gebildet werden, von denen der fahrzeuginnere Längsträgerarm am Fahrzeugtunnel und von denen der fahrzeugäußere Längsträgerarm am Türpfosten der A-Säule angeschlossen ist.

Die bekannte Längsträgerabstützung weist gegenüber der erstgenannten Ausführungsform den Vorteil auf, daß zumindest ein Längsträgerblech fortlaufend bis unterhalb des vorderen Bereiches des Bodenbleches geführt wird, weist jedoch den Nachteil auf, daß für die weiteren gabelartigen Längsträgerarme wieder die den Kraftfluß störenden Schweißverbindungen erforderlich sind.

Aus der DE-A-30 47 031 ist ein Vorderteil einer selbsttragenden Kraftfahrzeugkarosserie bekannt, bei der vordere Längsträger durch ein Längsträgerblech und ein dieses ergänzendes Stehblech gebildet werden, die nur kurz zum vorderen Bereich des Bodenbleches geführt sind und dort über ein Längsträgeranschlußblech miteinander verbunden werden.

Diese bekannte Anordnung weist den Nachteil auf, daß durch den Auslauf des Längsträgerbleches, des Stehbleches und des Längsträgeranschlußbleches auf etwa einer Höhe bei einem Frontaufprall eine gewisse Scharnierwirkung in diesem Bereich auftreten kann.

Die Aufgabe der Erfindung ist es, eine Längsträgerabstützung für den Vorderteil einer selbsttragenden Kraftfahrzeugkarosserie gemäß dem Oberbegriff des Patentanspruchs 1 derart zu verbessern, daß ein günstiger Kraftfluß, der bei einem Frontaufprall auftretenden Kräfte in den vorderen Bereich des Bodenbleches gewährleistet wird und darüberhinaus durch Reduzierung von Blechteilen und Schweißverbindungen die Herstellung der Kraftfahrzeugkarosserie vereinfacht und verbilligt wird.

Weiterhin soll eine sichere Abstützung der zum Bodenblech hin orientierten Radaufhängungsteile des Kraftfahrzeuges sichergestellt werden.

Gemäß der Erfindung wird diese Aufgabe gelöst, indem eine Längsträgerabstützung für den Vorderteil einer selbsttragenden Kraftfahrzeugkarosserie gemäß dem Oberbegriff des Patentanspruchs 1 die im Kennzeichenteil des Patentanspruchs 1 aufgezeigten Merkmale aufweist.

Im Anspruch 2 ist eine zweckmässige Einzelheit der Erfindung erläutert.

Dadurch, daß die vorderen Längsträger aus zwei Längsträgerblechen in einem Stück mit den gabelartigen Längsträgerarmen ausgebildet sind und die beiden Längsträgerarme im unteren Bereich ihrer Gabelung über ein stark profiliertes Verstärkungsblech miteinander verbunden sind, wird ein günstiger Kraftfluß von aus einem Frontaufprall herrührenden Kräften auf den dem Fahrzeugtunnel benachbarten Bereich des Bodenbleches bzw. dem Türschweller der Kraftfahrzeugkarosserie sichergestellt, während das Verstärkungsblech im Bereich der Gabelung ein Aufspalten verhindert und darüberhinaus einen günstigen Abstützpunkt für die Lenkeranordnung der Radaufhängung bereitstellt.

Dadurch, daß die fahrzeuginneren Längsträgerarme über ein U-förmiges Querträgerblech, das mit dem Bodenblech ein Kastenprofil bildet, miteinander verbunden sind, wird ein Querträger im Bereich der Spritzwand bzw. des vorderen Bodenblechteiles gebildet, der im Fall eines Frontaufpralls eine Barriere gegen zurückdrängende Antriebsaggregate darstellt.

Die Erfindung wird anhand eines in den beiliegenden Zeichnungen erläuterten Ausführungsbeispieles erläutert.

Es zeigt :

Fig. 1 eine Schrägrißansicht der Längsträgerabstützung für den Vorderteil einer selbsttragenden Kraftfahrzeugkarosserie vom Fahrgastraum mit Blick auf die Spritzwand bzw. den vorderen Bodenblechteil gesehen ;

Fig. 2 einen vertikalen Längsschnitt entlang der Linie II-II in Fig. 1

Fig. 3 einen vertikalen Querschnitt entlang der Linie III-III in Fig. 1 und

Fig. 4 einen vertikalen Schrägschnitt entlang der Linie IV-IV in Fig. 1.

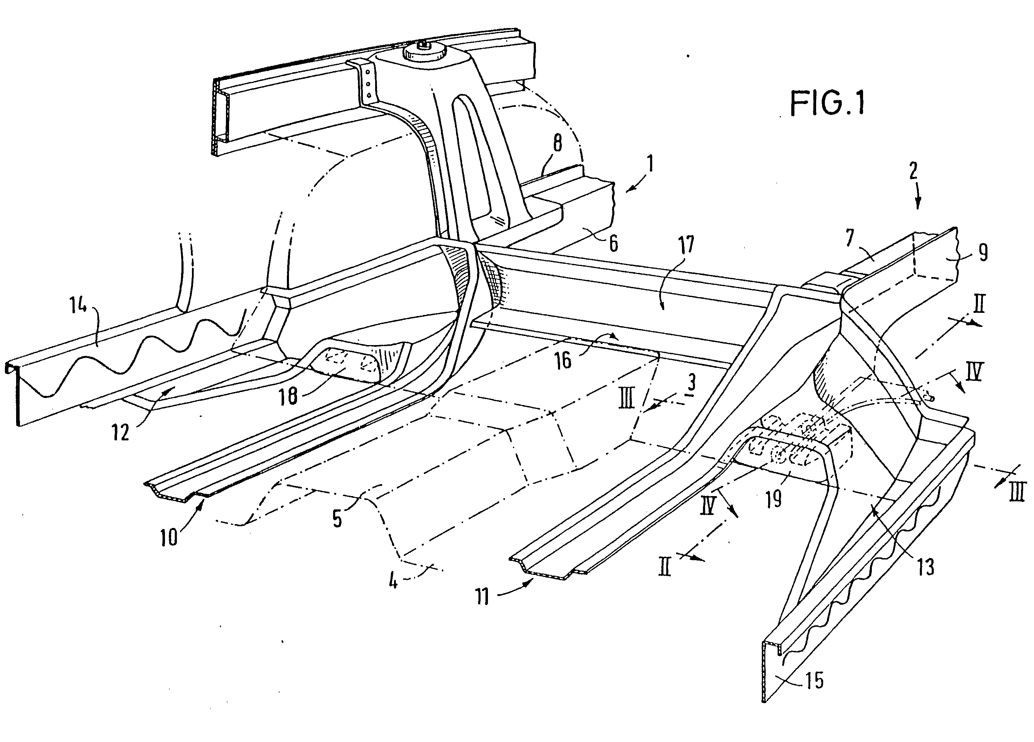

Wie aus Fig. 1 zu ersehen ist, besteht der Vorderteil einer selbsttragenden Kraftfahrzeugkarosserie im wesentlichen aus zwei vorderen Längsträgern 1 und 2, die in ihren hinteren Bereichen mit dem Bereich der Spritzwand bzw. des vorderen Bodenblechteiles 3 des Bodenbleches 4 bzw. der Bodengruppe der Kraftfahrzeugkarosserie verbunden sind.

Das Bodenblech 4 ist hierbei in üblicher Weise mit einem Fahrzeugtunnel 5 versehen, in dem in bekannter Weise Getriebe und Antriebswellen angeordnet werden.

Jeder der beiden vorderen Längsträger 1 und 2 besteht aus einem inneren Längsträgerblech 6 bzw. 7 und aus einem äußeren Längsträgerblech 8 bzw. 9. Die inneren Längsträgerbleche 6 und 7 weisen in ihrem vorderen Bereich einen U-förmigen Querschnitt mit vertikal liegenden Schweißflanschen auf, der sich in ihrem hinteren Bereich bis unterhalb des vorderen Bereiches 3 des Bodenbleches 4 erstreckt, wobei die Schweißflansche aus der vertikalen Anordnung in eine horizontale sich dem Bodenblech anschmiegende Anordnung übergehen und fahrzeuginnere Längsträgerarme 10 und 11 bilden.

Die äußeren Längsträgerbleche 8 und 9 weisen in ihrem vorderen Bereich einen ebenen Verlauf auf, der im vorderen Bereich 3 des Bodenbleches 4 in einen seitlich nach außen verschwenkt einen V-förmigen Querschnitt aufweisenden Bereich und dann in einen U-förmigen Querschnitt aufweisenden Bereich übergeht, der fahrzeugäußere Längsträgerarme 12 und 13 bildet, die über sich dem Bodenblech 4 bzw. den Türschwellern 14 und 15 anschmiegende Schweißflansche mit dem Bodenblech 4 und den Türschwellern 14 und 15 verbunden sind.

Die beiden fahrzeuginneren Längsträgerarme 10 und 11 sind hierbei über ein U-förmiges Querträgerblech 16 miteinander und mit dem Bodenblech 4 verbunden, so daß ein ein Kastenprofil aufweisender Querträger 17 gebildet wird, der für die Querstabilität des Vorderteiles der selbsttragenden Kraftfahrzeugkarosserie sorgt.

Die zur Bildung der fahrzeugäußeren Längsträgerarme 12 und 13 erforderliche starke Verschwenkung der äußeren Längsträgerbleche 8 und 9 könnte bei durch einen Frontaufprall eingeleiteten Kräften zu einem Aufspalten der Längsträgerarme 10 und 12 bzw. 11 und 13 an ihrer Gabelung führen, so daß in diesen Bereichen ein stark profiliertes Verstärkungsblech 18 bzw. 19 angeordnet wird. Die Verstärkungsbleche 18 und 19 können hierbei in günstiger Weise mit Aufnahmeelementen für Führungslenker der Radaufhängung versehen werden.

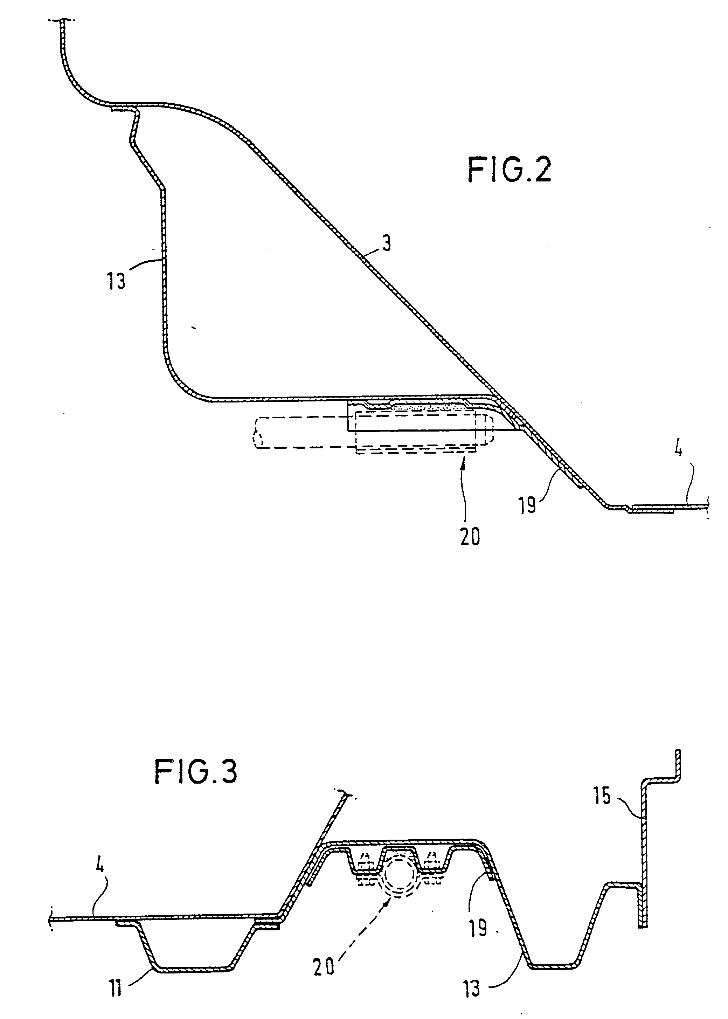

In Fig. 2 ist ein vertikaler Längsschnitt durch die Längsträgerabstützung gezeigt, der parallel zu einer Längsmittelebene des Kraftfahrzeuges verläuft und aus dem die in diesem Bereich V-förmige Profilierung des fahrzeugäußeren Längsträgerarmes 13 sowie die Anordnung des stark profilierten Verstärkungsbleches 19 zu entnehmen ist. Ein Führungslenker 20 für eine Radaufhängung (nicht gezeigt) ist nur andeutungsweise dargestellt.

In Fig. 3 ist ein vertikaler Querschnitt gezeigt, der parallel zu einer Fahrzeugquerebene verläuft und aus dem die kastenförmige Profilierung der beiden Längsträgerarme 11 und 13 und deren Verbindung mit dem Verstärkungsblech 19 und dem Bodenblech 4 bzw. dem Türschweller 14 zu ersehen ist.

In Fig. 4 ist ein vertikaler Schrägschnitt gezeigt, aus dem die im Bereich der Verschwenkung großzügige kastenförmige Profilierung der beiden äußeren Längsträgerarem 12 und 13 und deren Anschluß an den vorderen Bodenblechteil 3 zu ersehen ist.

Die in den Figuren gezeigten Federbeinaufnahmen, die in Verbindung mit oberen Längsträgern und mit Kunststoffauskleidungen die Radhäuser des Vorderteils der selbsttragenden Kraftfahrzeugkarosserie bilden, werden im einzelnen nicht näher erläutert, da es sich hierbei um bereits bekannte Bauformen handelt.

**Patentansprüche**

1. Längsträgerabstützung für den Vorderteil einer selbsttragenden Kraftfahrzeugkarosserie mit einem einen Tunnel aufweisenden Bodenblech und mit aus Längsträgerblechen gebildeten, ein Kastenprofil aufweisenden, vorderen Längsträgern an jeder Seite, die sich jeweils im Bereich der Spritzwand bzw. des vorderen Bodenblechteiles in zwei gabelartige, in Verbindung mit dem Bodenblech Kastenprofile bildende Längsträgerarme aufteilen, von denen sich der fahrzeuginnere Längsträgerarm am Fahrzeugtunnel und der fahrzeugäußere Längsträgerarm am Türschweller anschließen, dadurch gekennzeichnet, daß die vorderen Längsträger (1 und 2) aus zwei Längsträgerblechen (6 und 8 bzw. 7 und 9) in einem Stück mit den sich an den vorderen Bereich (3) des Bodenbleches (4) anschmiegenden gabelartigen Längsträgerarmen (10 und 12 bzw. 11 und 13) ausgebildet sind und die beiden Längsträgerarme (10 und 12 bzw. 11 und 13) im unteren Bereich ihrer Gabelung mittels stark profilierter Verstärkungsbleche (18 bzw. 19) verbunden sind, die zusammen mit dem Längsträgerarmen (10 und 12 bzw. 11 und 13) die Vorderachslenkeraufnahme bilden.

2. Längsträgerabstützung nach Anspruch 1, dadurch gekennzeichnet, daß die fahrzeuginneren Längsträgerarme (10 und 11) über ein U-förmiges Querträgerblech (16), das mit dem vorderen Bereich (3) des Bodenbleches (4) ein Kastenprofil bildet, verbunden ist und einen Querträger (17) bildet.

## Claims

1. A side member support for the front part of a self-supporting motor vehicle bodywork, having a floor panel comprising a tunnel and, on each side, front side members which are formed from side member panels and have a box-type section and which are each divided in the region of the dashboard or the front part of the floor panel into two bifurcate side member arms which in conjunction with the floor panel form box-type sections and of which the side member arm towards the inside of the vehicle adjoins the vehicle tunnel and of which the side member arm towards the outside of the vehicle adjoins the sill, characterized in that the front side members (1 and 2) are formed from two side member panels (6 and 8 or 7 and 9 respectively) integrally with the bifurcate side member arms (10 and 12 or 11 and 13 respectively) closely adjacent to the front region (3) of the floor panel (4), and the two side member arms (10 and 12 or 11 and 13 respectively) are joined in the lower region of their forking by means of strongly sectioned reinforcement panels (18 and 19 respectively) which together with the side member arms (10 and 12 or 11 and 13 respectively) form the receiving means for the front axle guide rods.

2. A side member support according to Claim 1, characterized in that the side member arms (10 and 11) towards the inside of the vehicle are connected together by way of a U-shaped cross member panel (16), which together with the front region (3) of the floor panel (4) forms a box-type section, and they form a cross member (17).

## Revendications

1. Système d'appui pour longerons pour la partie avant d'une carrosserie autoportante de véhicule automobile comprenant une tôle de plancher comportant un tunnel, et des longerons avant disposés de chaque côté, qui sont formés par des tôles, possèdent un profil en forme de boîte et se subdivisent respectivement dans la zone du tablier d'auvent ou de l'élément avant de la tôle de fond, en deux bras en forme de fourche, qui forment, en liaison avec la tôle de fond, des profilés en forme de boîtes et parmi lesquels le bras de longeron, situé à l'intérieur du véhicule, se raccorde au tunnel de ce dernier, tandis que le bras de longeron, situé à l'extérieur du véhicule, se raccorde au seuil de porte, caractérisé en ce que les longerons avant (1 et 2) sont formés par deux tôles (6 et 8 ou 7 et 9) réunies d'un seul tenant aux bras de longerons en forme de fourche (10 et 12 ou 11 et 13), qui s'appliquent contre la partie avant (3) de la tôle de fond (4) et que les deux bras de longerons (10 et 12 ou 11 et 13) sont reliés, au niveau de la partie inférieure de leur zone subdivisée en forme de fourche, à l'aide de tôles de renforcement (18 ou 19) possédant un profilage accusé, qui constituent, conjointement avec les bras de longerons (10 et 12 ou 11 et 13), le logement des bras oscillants d'essieu avant.

2. Système d'appui pour longerons selon la revendication 1, caractérisé en ce que les bras de longerons (10 et 11), situés à l'intérieur du véhicule, sont reliés par l'intermédiaire d'une tôle (16) d'appui transversal en forme de U, qui forme, avec la partie avant (3) de la tôle de fond (4), un profilé en forme de boîte, et forment un support transversal (17).

FIG.1

FIG.2

13

3

20

19

4

FIG.3

4

15

11

20

19

13

# FIG.4